# EUROPEAN PATENT APPLICATION

(11) **EP 1 623 812 A1**
(43) Date of publication of application: **08.02.2006**
(21) Application number: 04425609.7
(22) Date of filing: 04.08.2004
(51) Int. Cl.: B29C 47/10, B29C 47/40, B29C 47/58

(54) **Feeder system for thermo-setting coating powders for a twin-screw extruder**

(71) Applicant: O.M.C. S.r.L., 21047 Saronno (Varese) (IT)
(72) Inventor: Cattaneo, Cristina, 21047 Saronno (Varese) (IT)
(74) Representative: Petruzziello, Aldo

(57) **Abstract**

A system is described for feeding thermo-setting coating powders (virgin products and/or fines) into a co-rotating twin-screw extruder (100) comprising an extrusion chamber (104) within which two extrusion screws (105) with their axes (A, A') parallel to each other are disposed. Said feeding system provides for forced feeding of said thermo-setting powders (virgin and/or fines) into the extrusion chamber (104) from the top downward at any point of a feeding mouth (131) disposed in the top side of the extruder cylinder, with direct access to the co-rotating extrusion screws (105).

## Description

The present invention refers to the field of the production of coating powders obtained from thermo-setting polymers or resins and refers in particular to a method and to a device for feeding such thermo-setting coating powders into a twin-screw extruder.

As it is known, there is a high market demand at present for thermo-setting powders which are used for coating or for dry painting of various types of items, such as for example section bars, sheet metals and the like. The coating process comprises the creation of a difference in electrostatic charge between the product to be coated and the thermo-setting powder so that the powder adheres permanently to the product to be coated on passing in an oven at the temperature for crosslinking of the thermo-setting resin.

Production of thermo-setting powders starts from a virgin product in the form of a mixture of various products in powder form also including the thermo-setting resin or polymer, having a diameter (particle size) of about 20 - 60 micron and a bulk density of about 0,6 - 1,1 gr/cm³. This mixture of virgin powder has such a consistency as to be able to be fed by falling freely into an extruder. For treatment of such virgin powders a co-rotating twin-screw extruder is generally used, that is an extruder provided with two extrusion screws disposed with their horizontal axes parallel to each other.

Said mixture of virgin powders is extruded inside the extruder, so that leaving the extruder a thermo-setting product in the molten state is obtained which is allowed to flow towards a calender provided with two opposing metal cylinders. In this manner the cylinders of the calender squeeze the thermo-setting resin so as to obtain, as the output of the calender, a strip or a ribbon of thermo-setting material which is passed on a cooling apparatus for solidification and flaking.

Said solidified strip of thermo-setting material is crushed and the flakes obtained therefrom are inserted in a micronizing mill. In the crushing chamber of the mil, the flakes are micronized by impact, by means of a pin disc, so as to obtain a fine powder. A second disc (classifier), suitably finned and supported by a variable speed rotor, subsequently selects the powder of the desired particle size. The selected powder is packaged to be sent to the end user in the coating industry.

The selection operation in the micronizing mill involves the generation of a certain amount of fine powder that is discarded. This production waste is commonly called "fines". It is obvious that the production of fines leads to an excessive waste of money which is further aggravated if the costs for disposal thereof in an ecological manner are considered.

For the above reasons, an effort has been made to use fines in the production line, introducing them into the extruder from the hopper where the virgin powders are normally fed. Since fines have a particle size of about 5-15 micron and a bulk density of about 0.1÷0.4 gr/cm³, this causes a considerable reduction in productivity or in the flow rate (Kg/h) of the extruder compared with the use of virgin powders, with a considerable financial loss.

Therefore, another idea has been to use fines mixed with virgin powders in a conventional extruder. This solution also does not guarantee commercially remunerative flow rates; moreover, the product obtained may be of poor quality because of mixing of powders with formulations that are not perfectly identical.

To overcome these drawbacks at least in part, solutions are known entailing an increase in the useful volume of the mixing chamber of the twin-screw extruder, to allow feeding of light powders, such as fines, at reasonable capacities. With this solution, by increasing the free volume of the extrusion chamber, a larger amount of product can be made to pass; however, the product is not compressed in an optimal manner, again with the result of low productivity.

Other solutions proposed for treatment of fines are extruders with side feeding, which have a twin-screw feeder that feeds the fines laterally into the main extruder. In this manner the fines are compressed to increase the productivity of the extruder.

However, said extruders with side feeding present some drawbacks due above all to the high radial stress that occurs on only one screw of the twin-screw extruder, in the area in which the fines are fed. This leads to sub-optimal use of the useful volume available and to a greater load and therefore to a greater deterioration of one screw if compared to the other. Furthermore, the high friction that occurs in the area of side entry of the fines within the extruder causes an excessive heating of that extrusion area which leads to a premature melting of the powders and consequently to an uneven formation of the molten mass inside the extruder.

The object of the present invention is to eliminate the drawbacks of the methods currently used by providing a system for feeding thermo-setting coating powders for a twin-screw extruder that is able to improve the productivity and the performances of the extruder.

Another object of the present invention is to provide such a system for feeding thermo-setting coating powders for a twin-screw extruder that is reliable from the point of view of the production process.

Another object of the present invention is to provide such a feeding system for thermo-setting coating powders for a twin-screw extruder that is versatile, profitable and easy to use.

These objects are achieved according to the invention with the procedure and the device whose characteristics are listed in appended independent claims 1 and 5, respectively.

Advantageous embodiments of the invention are apparent from the dependent claims.

The feeding system for thermo-setting powders for coating according to the invention is applied to a twin-screw extruder comprising an extrusion chamber within which two extrusion screws with axes parallel to each other and disposed on a horizontal plane are provided.

The main characteristic of the invention is represented by the fact that a forced feeding of said thermo-setting powders into the extrusion chamber is performed. This forced feeding takes place from the top downwards and substantially in the direction of the line of symmetry between the axes of the two co-rotating extrusion screws of the extruder.

Such a system allows even the lightest thermo-setting powders, such as fines obtained from production waste, to be compressed inside the extrusion chamber. Furthermore, said system distributes the product equally on the two extrusion screws during the forced introduction of the thermo-setting powders.

Further characteristics of the invention will be made clearer by the detailed description that follows, referring to a purely exemplary and therefore non limiting embodiment thereof, illustrated in the appended drawings, in which:
Figure 1 is a diagrammatic side elevational view, partially in section, illustrating an extruder to which a feeding system for thermo-setting powders according to the invention has been applied;
Figure 2 is an enlarged detail of Figure 1, illustrating positioning of the powder feeding device according to the invention;
Figure 3 is an enlarged view, in axial section, illustrating the body of the powder feeding device according to the invention;
Figure 4 is an enlarged view illustrating an embodiment of the auger of the powder-feeding device according to the invention;
Figure 5 is a view illustrating the powder-feeding device according to the invention with a conveying system of the twin-screw type with hopper shown exploded;
Figure 6 is a sectional view taken along the vertical plane of section VI-VI of Figure 2; and
Figure 7 is a sectional view, enlarged and partially broken off, taken along the horizontal planes of section VII-VII of Figure 2.

A powder feeding system according to the invention is described with the aid of the figures.

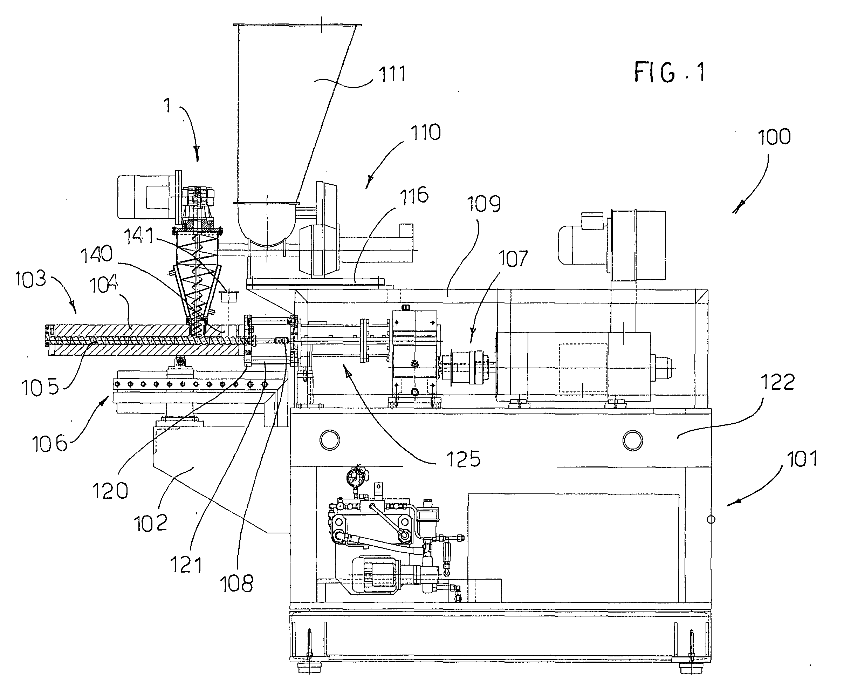

With reference to Figure 1, a co-rotating twin-screw extruder denoted as a whole with reference numeral 100 is illustrated. The extruder 100 comprises a supporting frame 101 firmly constrained to the ground. The frame 101 has a front part 102 which supports the heating body or cylinder 103 of the extruder so as to protrude forward from the frame 101. The rear end of the heating cylinder 103 is fixed to a flange 120 which, by means of horizontal columns 121, is constrained integrally to a reduction gear 125 mounted on the frame.

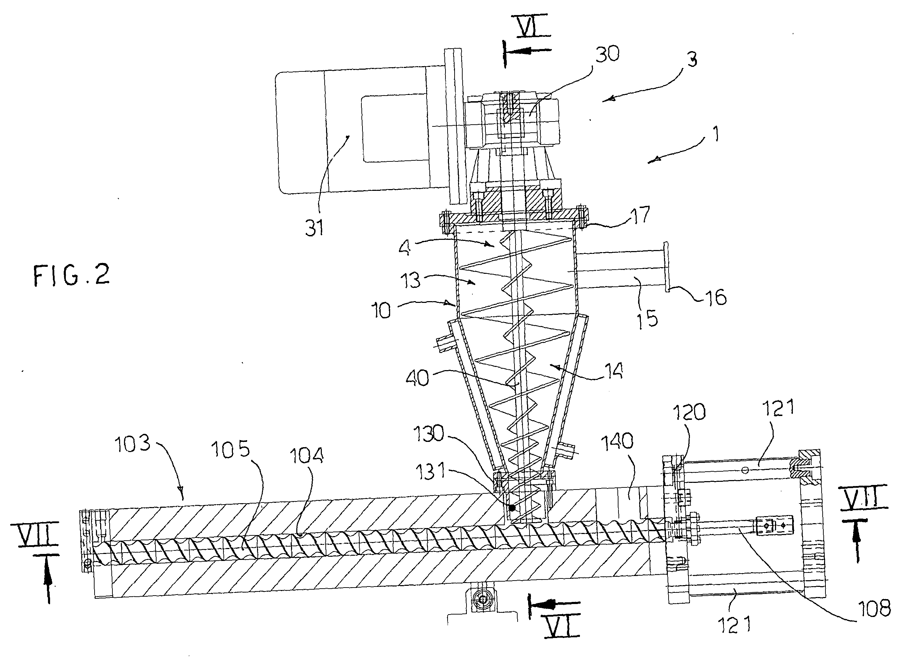

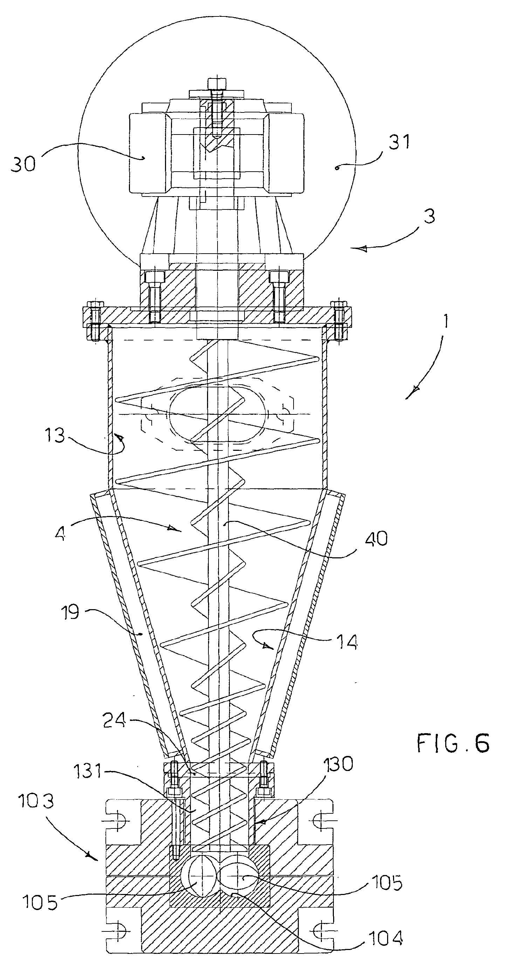

The heating cylinder 103 defines on its inside an extrusion chamber 104, shaped as an overturned 8 (as shown in Figure 6), within which are mounted rotatably two extrusion screws 105 (only one visible in Figures 1 and 2) with their axes parallel to each other and disposed on a horizontal plane. The heating cylinder 103 is heat regulated by a heat regulating system 106.

The extrusion screws 105 are driven in their movement of rotation by a motorization unit 107 which transmits the drive to the screws 105, by means of a transmission system 108 with joints. The motorization unit 107 is firmly fixed to an intermediate plane 122 of the supporting frame 101.

The supporting frame 101 has an upper surface 109 which extends above the motorization unit 107. On the upper surface 109 of the frame there is mounted a device 110 for conveying the material to be extruded towards a feeding device 1 according to the invention. The feeding device 1 is mounted upstream of the heating cylinder 103 to forcibly feed the material to be extruded into the extrusion chamber 104 of the heating cylinder 103.

As shown better in Figures 2 and 6, a seat 130 designed to receive the outlet end of the feeding device 1 is formed in the upper part of the heating cylinder 103. The seat 130 leads to a radial conduit 131 with a vertical axis, formed in the body of the heating cylinder, communicating with the extrusion chamber 104. The radial conduit 131 acts as a feeding mouth for the extrusion chamber.

Behind the feeding mouth 131, in a position upstream with respect to the direction of travel of the material in the extrusion chamber 104, there is formed a second mouth 140 which acts as a vent hole for releasing gases or vapours from the extrusion chamber 104. Expulsion of said gases and/or vapours from the vent hole favours the extrusion process and the feeding of the material in the extrusion chamber. The vent hole 140 can be closed with a special stopper 141.

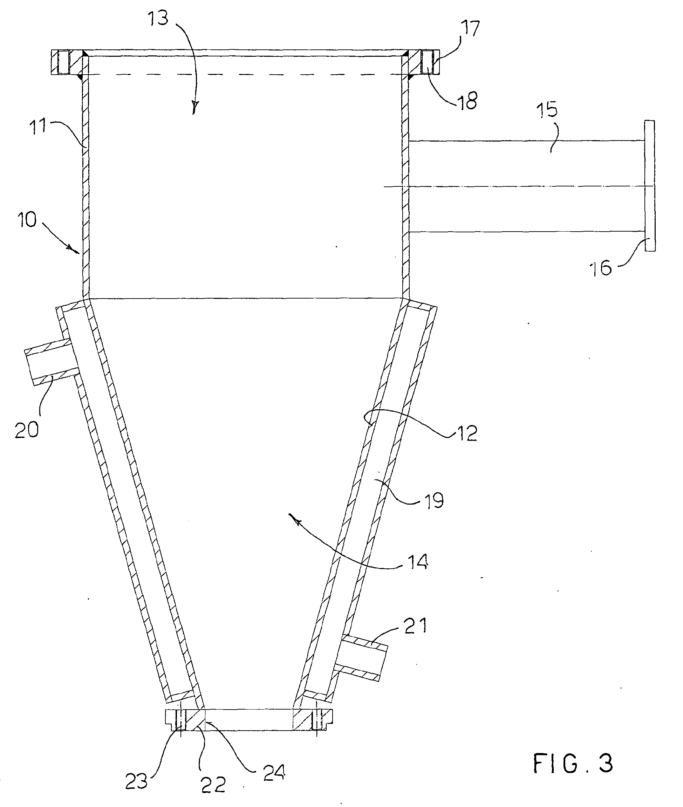

As shown better in Figure 3, the body 10 of the feeder 1 is hollow on the inside and open at the top and bottom. The body 10 comprises a cylindrical upper part 11 which continues with a frustoconical or funnel-shaped lower part 12. In this manner a cylindrical chamber 13 and a frustoconical chamber 14 are formed within the body 10 of the feeder.

A powder inlet duct 15 communicating with the cylindrical chamber 13 for entry of the thermo-setting powders protrudes radially outward from the lateral side of the cylindrical upper part 11. The powder inlet duct 15 has at its end an annular flange 16 which protrudes radially therefrom for fixing to the conveyor 110.

In the upper edge of the cylindrical part 11 there is provided an annular flange 17 provided with fixing holes 18 to support a motor unit 3 of the feeder device 1.

Around the side surface of the frustoconical part 12 is formed an annular cooling chamber 19 designed to receive a cooling fluid destined to be kept in recirculation around the frustoconical part 12. A cooling fluid inlet duct 21 protrudes radially outward from the lower part of the cooling chamber 19. A cooling fluid outlet duct 20 protrudes radially outward from the upper part of the cooling chamber 19. In this manner the recirculation of the cooling fluid in the cooling chamber 19 prevents the thermo-setting powders from melting because of the heat developed by friction in the body of the feeding device 1 before they reach the extrusion chamber 104 of the extruder.

At the bottom end of the frustoconical part 12 an annular flange 22 is provided which protrudes radially therefrom and is provided with fixing holes 23 for fixing in the special seat 130 of the heating cylinder of the extruder. The bottom flange 22 defines a circular outlet hole 24 from which the thermo-setting powder exits to be fed into the radial duct 131 (Figures 2 and 6) of the heating cylinder and thus into the extrusion chamber 104.

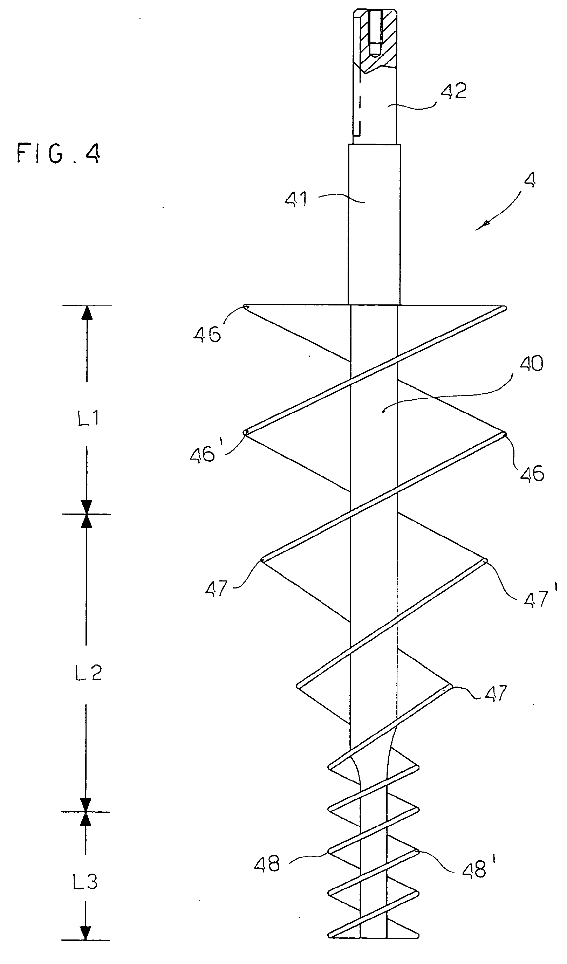

An auger 4 is inserted axially inside the body 10 of the feeder device. As shown in Figure 4, the auger 4 comprises a shaft 40 supported at one of its ends by a tang 41 which has a portion 42 provided with a device for transmitting the drive from a reduction gear 30 (Figure 2) forming part of the motor unit 3 of the feed device 1. The reduction gear 30 is driven by an electric motor 31.

One or more helixes with a variable pitch and radius in accordance with the process according to the invention can be provided around the shaft 40 of the auger 4.

Purely by way of non-limiting example, Figure 4 shows a possible embodiment of a double helix auger 4 comprising a first helix with a progressive radius (46, 47, 48) and a second helix with a progressive radius (46', 47', 48') disposed coaxially and intercalated with each other. The two helixes comprise:
- a first cylindrical section with a large radius (46, 46'), having a length L1 equal to the length of the cylindrical portion 11 of the body of the feeder and having a slightly smaller radius than the radius of the cylindrical chamber 13 of the feeder body;
- a second frustoconical section (47, 47') having a length L2 equal to the length of the frustoconical portion 12 of the feeder body and having a downwardly decreasing radius; and
- a third cylindrical section with a small radius (48, 48'), having a length L3 equal to the length of the radial duct 131 of the heating cylinder 103 of the extruder and having a slightly smaller radius than that of the inlet duct 131 of the extrusion chamber 104.

As a result, the auger 4 is a twin-helix auger divided into three progressive sections - large diameter cylindrical (L1)/frustoconical (L2)/small diameter cylindrical (L3) - in which the two helixes are coaxial and intercalated with each other and the pitches of the two helixes are variable and decreasing from top to bottom.

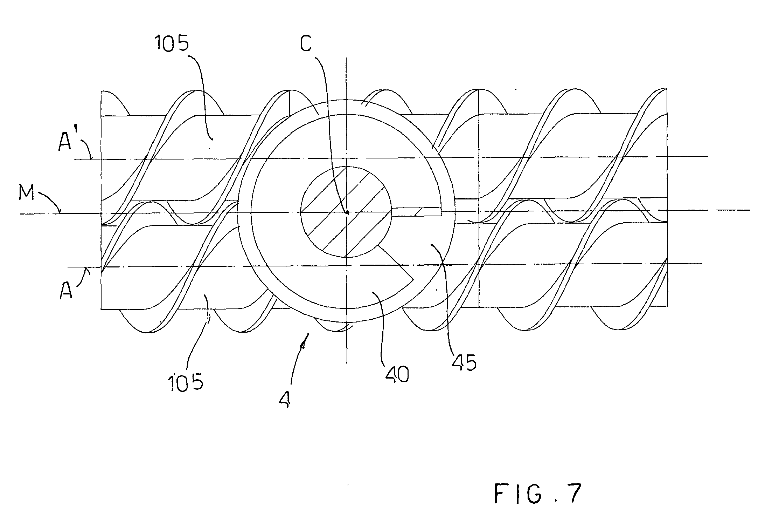

As shown in Figures 6 and 7, a possible position of the axis C of the shaft 40 of the auger 4, centred on the axis of symmetry M disposed in a symmetrical position between the axes (A,A') of the two extrusion screws 105, is identified.

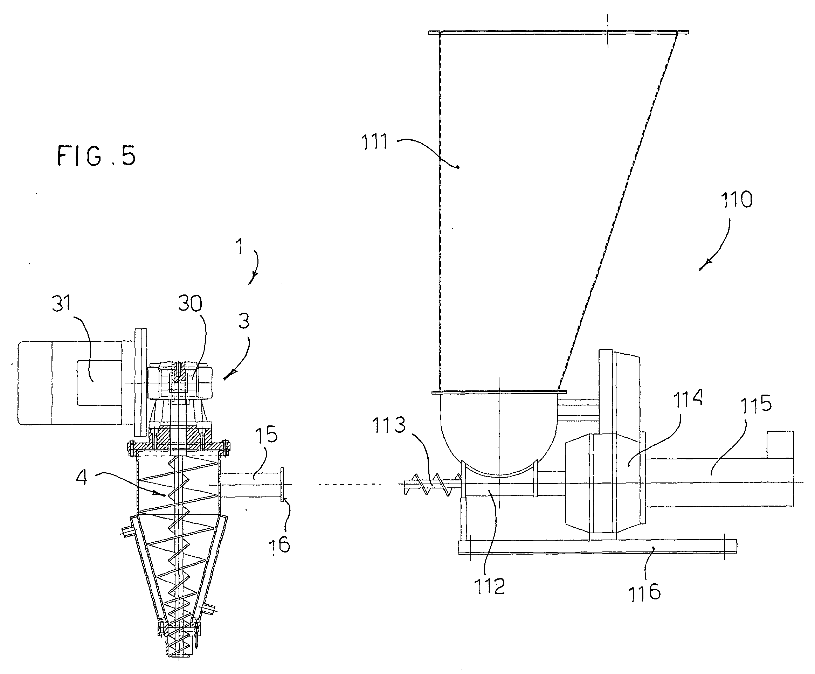

The thermo-setting powders are conveyed into the inlet duct 15 of the feeder 1 by means of a conveyor device 110 illustrated in Figure 5. The conveyor device 110 comprises a hopper 111 into which the powders are introduced by falling freely.

The hopper 111 has at its bottom end a horizontal duct 112 inside which two screws 113 are disposed rotatably (only one is visible in Figure 5) with the axes parallel and disposed on a horizontal plane. The screws 113 of the conveyor are connected to a reduction gear 114 driven by a motorization 115.

The hopper 111, the reduction gear 114 and the motorization 115 are supported by means of brackets on a plate 116 which is fixed to the upper surface (Figure 1) of the supporting frame of the extruder. The front ends of the screws 113 come out to the conveying duct 112 of the hopper 111 so as to be able to be inserted into the inlet duct 15 of the feeder device. Clearly instead of the conveyor 110, any other type of conveyor able to convey the thermo-setting powder into the inlet duct 15 of the feeder 1 can be used.

Operation of the feeder system 1 according to the invention is described below. The mixture of thermo-setting coating product, in particular the fines obtained as production process waste, is introduced from the top into the hopper 111 of the conveyor 110. The two screws 113 set in rotation by the motor 115, by means of the reduction gear 114, convey the fines into the radial inlet duct 15 of the feeder 1.

Then the products (virgin and/or fines) are conveyed into the cylindrical chamber 13 of the feeder and are compressed and pushed downwards by means of rotation of the auger 4. It should be noted that the shape of the twin-helix auger 4 has been designed so as to allow an adequate compression of the products (virgin and/or fines) and at the same time a forced conveying of the compressed products.

In this manner, the products (virgin and/or fines), suitably compressed, exit from the outlet hole 24 of the bottom flange of the feeder body and continue their travel downward in the duct 131 (Figure 2) of the heating cylinder of the feeder. It should be noted that inside the duct 131 of the heating cylinder the products (virgin and/or fines) continue to be fed forcibly from the end portion L2 (Figure 4) of the auger 4. As a result, the compressed products (virgin and/or fines) leaving the duct 130 enter forcibly into the extrusion chamber 104.

It should be noted, as shown in Figures 6 and 7, that the flow of compressed products (virgin and/or fines) enters perfectly level with the axis of symmetry M between the axes (A, A') of the two extrusion screws 105. This results in various advantages as listed below.

Forced entry of the products (virgin and/or fines) into the extrusion chamber 104 generates an equally distributed stress on the two extrusion screws 105, resulting in a less wear, in a greater use of the free volume available and in a consequent optimised hourly flow rates, for the same screw diameter.

Furthermore, since the forced flow of products (virgin and/or fines) to the entry of the extrusion chamber 104 affects the extrusion screws 105 tangentially and not radially, friction between the products (virgin and/or fines) and the extrusion screws 105 is minimized in the area of entry thereof, with the result of a minimal increase in heat which does not lead to uneven melting of the products (virgin and/or fines).

The present description by way of example is directed at the fines recovery sector, a sector for which the results obtained have been particularly interesting and superior to those of alternative systems. However, is also extends to the possibility of using the feeding system 1 also for feeding virgin polymers or mixtures of fines and virgin products.

Numerous changes and modifications of detail within the reach of a person skilled in the art can be made to the present embodiment without departing from the scope of the invention as set forth in the appended claims.

## Claims

1. A procedure for feeding thermo-setting coating powders into a twin-screw extruder (100) comprising an extrusion chamber (104) within which are disposed two co-rotating extrusion screws (105) with their axes (A, A') parallel to each other, **characterized in that** it comprises a forced feeding of said thermo-setting powders from the top downwards into the extrusion chamber (104), with direct access to the extrusion screws (105).

2. A feeding procedure according to claim 1, **characterised in that** said forced feeding of the thermo-setting powders takes place substantially in the direction of the axis of symmetry (M) between the axes (A, A') of the two co-rotating extrusion screws (105).

3. A feeding procedure according to claim 1 or 2, **characterised in that** said forced feeding of the thermo-setting coating powders takes place by means of a auger (4) having a vertical axis (C) which intersects with said axis of symmetry (M) between the axes (A, A') of the co-rotating extrusion screws (105) of the extruder.

4. A feeding procedure according to any one of the preceding claims, **characterised in that** it is used for feeding fine thermo-setting coating powders having a particle size of about 5-15 micron and a bulk density of about 0,1 - 0,4 gr/cm³.

5. A feeding device (1) for feeding thermo-setting coating powders into a twin-screw extruder (100) comprising an extrusion chamber (104) defined in an extrusion cylinder (103) within which two co-rotating extrusion screws (105) with their axes (A, A') parallel to each other are disposed, **characterized in that** it comprises pusher means (4) designed to allow a forced feeding of said thermo-setting powders into the extrusion chamber (104) from the top downwards, in any point of a feeding mouth (131) disposed on the top side of the extruder cylinder (103), with direct access to the co-rotating extrusion screws (105).

6. A feeding device (1) according to claim 5, **characterized in that** the forced feeding of said thermo-setting powders takes place substantially in the direction of the axis of symmetry (M) between the axes (A, A') of the two extrusion screws (105) of the extruder.

7. A feeding device (1) according to claim 5 or 6, **characterised in that** said pusher means (4) comprise an auger (4).

8. A feeding device (1) according to claim 7, **characterised in that** said auger (4) comprises one or more coaxial helixes (46, 47, 48; 46', 47', 48') alternating with each other, with variable radii and pitches.

9. A feeding device (1) according to claim 8, **characterised in that** the body of said feeding device comprises an upper cylindrical chamber (13) and a lower frustoconical chamber (14) from which the auger (4) of the feeder protrudes downward to be inserted in said feeding mouth (131) disposed on the top side of the extruder cylinder (103).

10. A feeding device (1) according to claim 9, **characterised in that** around the chamber (14) of the feeder body there is provided an annular cooling chamber (19) for the passage of a cooling fluid.

11. A feeding device (1) according to any one of claims 6 to 10, **characterised in that** it comprises a conveying device (110) designed to transfer said thermo-setting powder into the feeder device (1).

12. A co-rotating twin-screw extruder (100) for extrusion of thermo-setting coating powders, **characterised in that** it comprises a device (1) for feeding said thermo-setting coating powders according to any one of claims 5 to 11.
